# EUROPEAN PATENT SPECIFICATION

(11) **EP 4 127 327 B1**
(45) Date of publication and mention of the grant of the patent: **01.05.2024**
(21) Application number: 21721998.9
(22) Date of filing: 26.03.2021
(51) Int. Cl.: E02F 3/43, B60L 50/15, E02F 9/20, E02F 9/22, F15B 11/024

(54) **APPARATUS FOR USE ON CONSTRUCTION OR WORKSITE MACHINES, FOR EXAMPLE AN EXCAVATOR**
VORRICHTUNG ZUR VERWENDUNG AN BAU- ODER BAUSTELLENMASCHINEN, Z.B. EINEM BAGGER
APPAREIL DESTINÉ À ÊTRE UTILISÉ SUR DES ENGINS DE CONSTRUCTION OU DE CHANTIER, PAR EXEMPLE UNE EXCAVATRICE

(30) Priority: 26.03.2020 NO 20200361
(43) Date of publication of application: 08.02.2023
(73) Proprietor: Elmaco AS, 4440 Tonstad (NO)
(72) Inventor: HAUGHOM, Per Olav, 4440 TONSTAD (NO)
(74) Representative: Håmsø Patentbyrå AS
(86) International application number: PCT/NO2021/050086
(87) International publication number: WO 2021/194356

(56) References cited:
- US-A1- 2003 097 837
- US-A1- 2005 103 006
- US-A1- 2020 016 987

## Description

### Technical field

The present invention relates in particular to the supply of energy for operating construction or worksite machines.

### Background

The construction industry is faced with the challenge of reducing climate gas emissions to comply with requirements and targets. Construction and/or worksite machines have traditionally been provided with combustion engines which are used to operate drive wheels for moving the machine from location to location on the worksite. The combustion engines also act as primary energy source to transmit power to hydraulic circuits for operating hydraulic lifting components of such machines. Using combustion engines can result in undesired emissions of carbon dioxide into the atmosphere.

To address this matter, batteries have been adopted increasingly in construction and/or worksite machines to provide a cleaner operational solution. Today's solutions using batteries in such machines however face challenges in providing efficient charging and conversion of energy from the battery into work performed by the machine. Batteries can be costly to install and when energy consumption is high, then typically only short amounts of useful time are available between charges, and this can result in reduced efficiency of the machine. Document US 2005/103006 A1 discloses for example a construction machine storing generated power in a fuel cell.

At least one aim of the invention is to obviate or at least mitigate one or more drawbacks of prior art.

### Summary

According to a first aspect of the invention defined in independent claim 1, there is provided apparatus for use on a construction or worksite machine, the machine being provided with a main body and at least one lift/lower element coupled to the main body, the apparatus comprising: at least one hydraulic cylinder for operating the lift/lower element; at least one hydraulic pump that has at least one electric motor coupled thereto for operating the hydraulic pump, the pump being configured for pumping hydraulic fluid along a flowline for operating at least one hydraulic cylinder that is coupled to the lift/lower element; and energy supply means comprising: at least one battery to provide electrical energy to the electric motor; and at least one hydrogen fuel cell for generating and supplying the battery with electrical energy for charging the battery.

In this way, energy supplied to the electric motor can be generated by the fuel cell. The energy supply means may thus be configured for supplying the electric motor with energy generated by the fuel cell, the fuel cell in use supplying the battery with electrical power for charging the battery. Peak demands in power e.g. when extending/retracting the hydraulic cylinder for operating the lift/lower element, can thus be accommodated with the battery being replenished in periods of lower demand by energy from the fuel cell.

According to the invention, the hydraulic cylinder is configured to provide volumetric neutral operation. Hydraulic control valves for controlling the cylinder may therefore not be required. Energy losses may be minimised, and the pump may be readily driven in motor mode by the hydraulic fluid from the cylinder.

According to the invention, the hydraulic cylinder may be configured to retract or extend to under load, and the hydraulic pump may be operable in motor mode using hydraulic fluid driven by the load to communicate return energy from the cylinder to transfer the energy produced by the hydraulic cylinder under load to at least one energy storage unit. The energy storage unit comprises the at least one battery. The return energy may be used to charge the battery. The return energy may thus reduce consumption of hydrogen and/or power generation requirements.

The apparatus may further comprise at least one control member for controlling either or both the speed, e.g. rate of revolution, and the direction of the electric motor.

The hydraulic cylinder may be operable for producing movement of the lifting member, in dependence upon the speed or rate of revolution of the electric motor.

The control member may comprise a user-operable control member, e.g. an operator handle, button, or any other user-controllable member. The control member arranged to produce at least one signal for controlling the electric motor. The apparatus may further comprise at least one signal provider for producing at least one signal in accordance with user control of the control member.

The apparatus may further comprise at least one drive unit for controlling the supply of electrical power to the electric motor. More specifically, the drive unit may be operable to control the supply of electrical power to the electric motor in dependence upon at least one signal transmitted from at least one signal provider.

The apparatus may further comprise at least one hydrogen storage tank for storing hydrogen. The hydrogen storage tank may be coupled in fluid communication with the hydrogen fuel cell for supplying hydrogen to the hydrogen fuel cell, and the hydrogen fuel cell may be operable to generate electrical energy using the supplied hydrogen.

The hydrogen fuel cell may be configured to be operable for producing electrical energy and supplying the battery with energy that may be equal to that being taken out during operations for replenishing the battery level during operation of the electrical motor. The battery may operate in effect to regulate power usage.

Preferably, there is provided a construction or worksite machine provided with a main body and at least one lift/lower element coupled to the main body, wherein the machine includes the apparatus in accordance with the first aspect of the invention.

The construction or worksite machine may for example be an excavator, a tipper truck, or any other machine. In the example of the excavator, the lift/lower element or elements may comprise any of: a boom, an arm, and a bucket. In the example of a tipper truck, lift/lower element may comprise a loading base, and the hydraulic cylinder may be operable to lift or lower part of the loading base to tip the loading base, e.g. for offloading material from the loading base.

The battery may be used to supply a motor with power for propulsion of the construction machine between locations. To this end, the motor may provide power to drive one or more drive wheels or caterpillar tracks of the machine. The motor may operate to turn one or more axles which may be coupled to the one or more drive wheels or caterpillar tracks.

The machine may have an undercarriage and the main body may be rotatable with respect to the undercarriage, e.g. about a vertical axis. The machine may have a work assembly which may be rotatable with respect to the main body. The work assembly may comprise the at least one lift/lower element. The battery may be used to supply power for rotating the main body with respect to the undercarriage and/or for rotating the work assembly with respect to the main body.

According to a second aspect of the invention defined in independent claim 15, there is provided apparatus for use on a construction or worksite machine, the apparatus comprising: at least one hydraulic cylinder; at least one hydraulic pump that has at least one electric motor coupled thereto for operating the hydraulic pump, the pump being configured for pumping hydraulic fluid along a flowline for operating at least one hydraulic cylinder to extend or retract; and energy supply means comprising: at least one battery to provide electrical energy to the electric motor; and at least one fuel cell for generating and supplying the battery with electrical energy for charging the battery. The machine may be provided with a main body and at least one lift/lower element coupled to the main body. The hydraulic cylinder may be a hydraulic cylinder for operating the lift/lower element. The hydraulic cylinder may be coupled to the lift/lower element. The fuel cell may be a hydrogen fuel cell.

Preferably, there is provided a construction or worksite machine which includes the apparatus in accordance with the second aspect of the invention.

The machine may be provided with a main body and at least one lift/lower element coupled to the main body.

According to a third aspect of the invention, there is provided a method of operating the construction or worksite machine defined in dependent claims 16 and 17. The method may include the steps of: providing the construction or worksite machine; controlling at least one hydraulic cylinder to perform site operations. The site operations may be lifting/lowering operations. The method may include controlling lift/lower element(s), e.g. of a work assembly. The method may include using a control device or operating, for example at least one operating lever, handle or button, to control the hydraulic cylinder and/or the lift/lower element(s) to perform the operations.

Embodiments are advantageous in various ways as will be apparent from throughout the present specification.

### Drawings and description

There will now be described, by way of example only, embodiments of the invention with reference to the accompanying drawings, in which:
- Figure 1: is a perspective representation of a construction or worksite machine in the form of an excavator according to an embodiment of the invention; and
- Figure 2: is a schematic representation of apparatus for transmitting energy to one or more hydraulic lifting components of the machine of Figure 1.

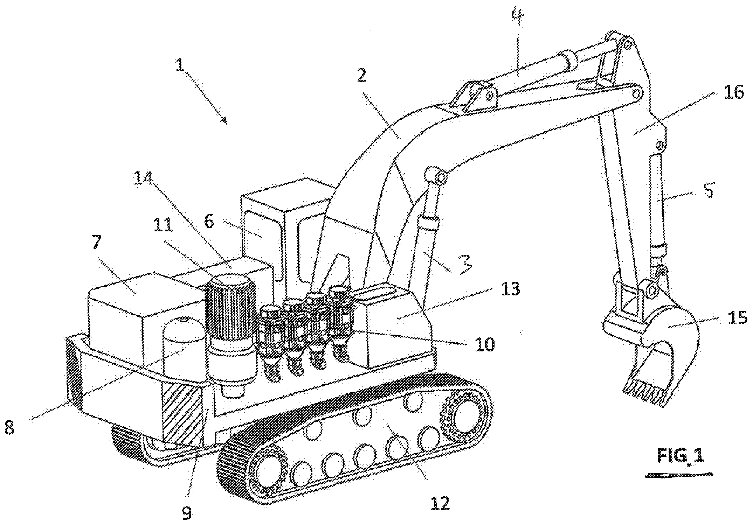

Turning firstly to Figure 1, a construction or worksite machine in the form of an excavator 1 is depicted. The excavator 1 has a work assembly that includes lift/lower elements in the form of a boom 2, an arm 16, and a bucket 15. The boom 2, the arm 16, and the bucket 15 are controllable respectively by first to third hydraulic cylinders 3, 4, 5.

The bucket 15 is coupled to the arm 16 and is movable about a pivot relative to the arm by operation of the third hydraulic cylinder 5. One end of the hydraulic cylinder 5 is mounted to the arm 16 and the other end of the hydraulic cylinder 5 is mounted to the bucket 15. The hydraulic cylinder 5 is operable to extend or retract, thereby varying the distance between the ends, to move the bucket 15 relative to the arm 16.

The arm 16 is coupled to the boom 2 and is movable about a pivot relative to the boom 2 by operation of the second hydraulic cylinder 4. One end of the hydraulic cylinder 4 is mounted to the boom 2 and the other end of the hydraulic cylinder 4 is mounted to the arm 16. The hydraulic cylinder 4 is operable to extend or retract, thereby varying the distance between the ends, to move the arm 16 relative to the boom 2.

The boom 2 is coupled to a main frame 9 of the excavator 9. The boom 2 is movable about a pivot relative to the main frame 9 by operation of the first hydraulic cylinder 3. One end of the hydraulic cylinder 3 is mounted to the main frame 9 and the other end of the hydraulic cylinder 3 is mounted to the boom 2. The hydraulic cylinder 3 is operable to extend or retract, thereby varying the distance between the ends, to move the boom 2 relative to the main frame 9.

Through operation and control of the hydraulic cylinders 3, 4, 5, the work assembly of the excavator can perform excavation operations on worksites or construction sites, such as digging, collecting earth or other materials into the bucket 15, and lifting, lowering, and manoeuvring the bucket 15, e.g. with materials loaded therein, from one location to another. The main frame 9 is provided on an undercarriage 12 with caterpillar drive tracks for allowing the excavator to travel around the site. The main frame 9 is mounted rotationally upon the undercarriage 12 to allow rotation of the main frame relative to the undercarriage 12 about a vertical axis for further manoeuvrability of the work assembly.

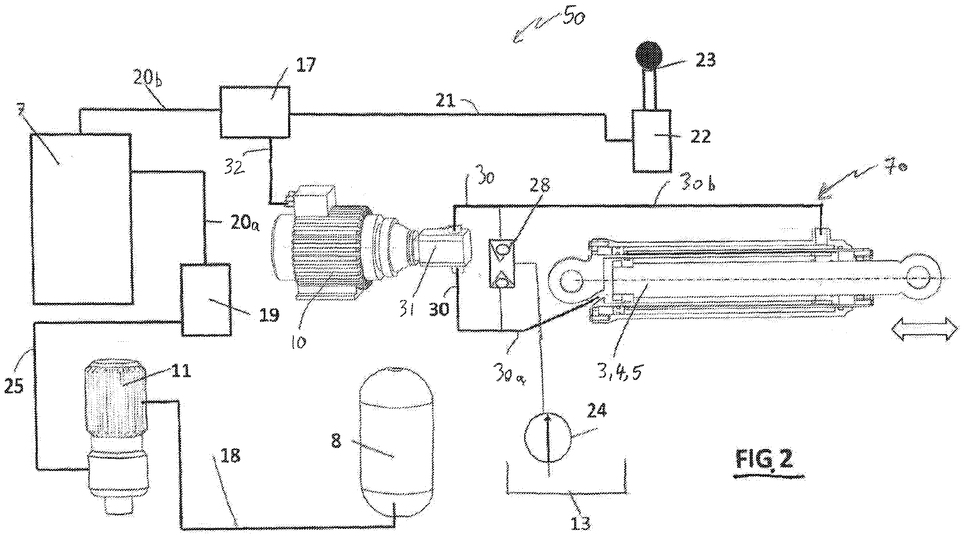

With reference now to Figure 2, the apparatus 50 for operating the work assembly is described in further detail. The apparatus 50 includes a hydraulic circuit 70 by which the hydraulic cylinder 3, 4, 5 is provided with hydraulic fluid. The circuit 70 has a hydraulic flowline 30 and an electrically operated pump 31 for driving the hydraulic fluid along the flowline 30. The flowline has a first in/out section 30a which is connected in fluid communication with at least one first-side chamber of the hydraulic cylinder 3, 4, 5, and a second in/out section 30b which is connected in fluid communication with at least one second-side chamber of the hydraulic cylinder 3, 4, 5.

To extend the hydraulic cylinder 3, 4, 5, hydraulic fluid is driven, by operation of the pump 31 at least if extending against a load, through the first in/out section 30a into the first-side chamber. The fluid in the first-side chamber of the cylinder acts upon the piston member and urges the piston member to move along the piston housing. By way of the movement of the piston member, hydraulic fluid in the second-side chamber is caused to be expelled into the second in/out section 30b. If extending with the load, e.g. under inertia due to gravity, the weight of the load may drive or assist the pump to drive the extension of the cylinder.

Conversely, to retract the hydraulic cylinder 3, 4, 5, hydraulic fluid is driven, by operation of the pump 31 at least if retracting against a load, in the opposite direction through the second in/out section 30b into the second-side chamber. The fluid in the second-side chamber of the cylinder acts upon the piston member and urges the piston member to move along the piston housing, and by way of the movement of the piston member, hydraulic fluid from the first-side chamber is expelled into the first in/out section 30a. If retracting with the load, e.g. under inertia due to gravity, the weight of the load may drive or assist the pump to drive the retraction of the cylinder.

As will be explained further in the following, the energy of the load driving the retraction or extension of the cylinder can be transmitted through the hydraulic fluid and pump (in motor mode) back to the battery which may reduce overall energy consumption of the apparatus.

The hydraulic cylinder 3, 4, 5 in this example has a volumetric displacement which is equal in both directions. That is, the amount of fluid entering and being expelled over a full stroke of the piston member is the same in both directions. This behaviour is termed "volumetric neutral" herein. As a result, the flowline 30 forms a closed loop system which circulates a constant amount of hydraulic fluid at desired pressure cycling back and forth, depending on the direction of operation of the cylinder. There is no need for hydraulic fluid to be returned to hydraulic tank 13. Load-sensing directional control valves and associated hydraulic components as commonly provided in the prior art on the in/out lines to the two chambers of the cylinder are consequently also not required, and this can provide significant improvements in efficiency. The hydraulic circuit 70 does however include a replenishment valve 28 for topping up the hydraulic fluid in the circuit if needed, e.g. from hydraulic tank 13 into the first or second in/out lines 30a, 30b, if over time there have been losses through leakage, etc.

The volumetric neutral hydraulic cylinder 3, 4, 5 can be provided by way of the surfaces of the piston member inside the cylinder, e.g. on the piston member, against which the hydraulic fluid exerts force to move the piston member, being of equal area in both directions. Thus, in the one direction, hydraulic fluid may exert pressure against a first set of surfaces of the piston member, and in the other direction, hydraulic fluid may exert pressure against a second set of surfaces of the piston member, and the total area of the surfaces of each set is substantially equal. Various examples of volumetric neutral hydraulic cylinders are described in the published patent application PCT/NO2020/050165 with publication number WO2020/256564.

The pump 31 is electrohydraulic. It has an electric motor 10 for operating the pump 31 for pumping the hydraulic fluid in the flowline 30 in one direction or the other depending upon which direction the cylinder 3, 4, 5 is to be operated.

The apparatus 50 includes battery 7 for supplying electrical power for operating the motor 10. Furthermore, the apparatus 50 includes a hydrogen fuel cell 11. The hydrogen fuel cell 11 uses hydrogen to produce electrical energy. The hydrogen is obtained from a storage tank 8. The storage tank 8 is in fluid communication with the fuel cell 11. The hydrogen is supplied through a fluid line 18 between the tank 8 and the fuel cell 11. The hydrogen fuel cell 11 is electrically coupled through an electrical feed line 25 and a transformer 19 to the battery, such that the generated electrical current from the hydrogen fuel cell 11 is fed to the battery 7 to replenish the electrical charge of the battery 7. The transformer 19 is coupled electrically to the battery 7 through electric line 20a. The transformer 19 converts the current from the fuel cell 11 to appropriate voltage and current for the proper charging of the battery 7.

The demand for power from the battery 7 is variable according to the work to be performed by the hydraulic cylinder 3, 4, 5. From time to time there can be peaks in the demand for battery power, for example when the hydraulic cylinder is to perform a lift and/or manoeuvre a load. The battery 7 is coupled electrically through electric line 20b to an electrical drive unit 17. The power is delivered from the battery 7 to the motor 10 through the electrical drive unit 17. The electrical drive unit 17 is arranged to control the delivery of power to the electric motor 10 based an input from an operator. The electrical drive unit 17 is arranged to receive a signal and/or instructions from the signal provider 22 and directs power from the battery 7 to the electric motor 10 in accordance with the received signal and/or instructions. The electric motor 10 is thus controlled accordingly, both in direction and speed, i.e. revolutions per minute.

An operating device 23 comprising a control handle is provided for controlling the operation of the hydraulic cylinder 3, 4, 5, in particular the speed and direction of the cylinder, i.e. the movement of the piston relative to the cylinder housing. The signal provider 22 cooperates with the operating device 23 so that it produces a signal corresponding to the input from the operating device 23. The signal provider 22 sends the signal to the electric drive unit 17 which in response draws power from the battery 7 correspondingly for the motor 10 so that the speed and direction of turning of the motor 10 is controlled in accordance with the input from the control handle 23. The signal provider 22 in this example is in communication with the electrical drive unit 17 through a signal carrier line 21 therebetween. The direction of rotation of the motor 10 and consequently the pump 31 corresponds to the direction of operation of the hydraulic cylinder 3, 4, 5, i.e. the motor 10 turning in one direction operates the hydraulic cylinder 3, 4, 5 to extend the piston, and the motor 10 turning in the opposite direction operates the hydraulic cylinder 3, 4, 5 to retract the piston. The motor speed determines and controls the pump speed which in turn determines and controls the fluid flow into and/or out of the hydraulic cylinder 3, 4, 5 and consequently the speed of extension and/or retraction of the cylinder 3, 4, 5.

By way of the volumetric neutral configuration, the fluid being expelled as the hydraulic cylinder 3, 4, 5 retracts is used to generate power and drive the pump 31. The pump 31 then acts as a motor to generate power with the surplus generated electrical energy being conveyed back to the battery 7 through the electric drive unit 17. The volumetric neutral configuration can help to maximise the amount of energy returned, providing for a more efficient overall system.

The proposed system can be highly advantageous. The battery 7 can be charged by a hydrogen fuel cell 11 so that the construction or worksite machine 1 can operate and perform lifting work without charging periods. The fuel cell 11 may in general have a relatively low effect but may operate continuously so that the amount of energy that is fed into the battery typically is equal to that taken out. The battery 7 functions as a form or regulator, so that peak power can be provided when the machine 1 has a need for short duration power peaks. As an example of this, one can consider that the hydrogen fuel cell for example delivers continuously 30 kW over an example period of 10 hours supplying total energy of 300 kWh. The battery has a storage capacity of 300 kWh. From time to time, over short periods, power peaks of approximately 100 kW are drawn from the battery, but the energy extracted over time is 300 kWh.

By combining the hydrogen fuel cell 11 with the battery 7, an energy efficient power transmission solution is provided which can yield low or no emissions and long work period without requiring access to electric charging and requiring merely change and/or refilling of hydrogen storage tanks 8.

The hydrogen fuel cell 11 and hydrogen tank 8 can deliver electrical energy with constant power to a battery 7 such that the amount of energy that is delivered is equal to the energy that is taken out of the battery 7 with variable power. To reduce the energy losses, the machine 1 has an energy efficient transmission using the electric motors 10 for the hydraulic pumps 31 so that the volumetric flow and pressure to the volumetric neutral cylinders 3, 4, 5 are controlled according to the rate of revolutions of the electric motor 10 and not by valves. The hydraulic cylinder(s) 3, 4, 5 can be volumetric neutral so that when lowering the loads, the hydraulic pump(s) 31 are operated in motor mode and the electric motors 10 as electrical generators that supply and/or generate energy back to the battery 7. This can reduce the overall use of energy and reduce consumption of hydrogen, help to extend the periods available for operation of the machine 1, and/or alleviate performance requirements upon the fuel cell 11 and/or battery 7.

Various modifications and improvements may be made without departing from the scope of the invention herein described, the invention being defined in the appended claims. In particular, whilst the description above is made for simplicity with reference to one cylinder, it can be appreciated that such a system may be employed similarly for any number of required cylinders. Each cylinder respectively may have its own pump and associated electric motor and electric drive unit. The supply of electrical power may take place through one or several batteries, and one or more fuel cells may serve one or more batteries.

## Claims

1. Apparatus for use on a construction or worksite machine which is provided with a main body and at least one lift/lower element coupled to the main body, the apparatus comprising:
at least one hydraulic cylinder (3, 4, 5) for operating the lift/lower element:
at least one hydraulic pump (31) that has at least one electric motor (10) coupled thereto for operating the hydraulic pump, the pump being configured for pumping hydraulic fluid along a flowline for operating at least one hydraulic cylinder that is coupled to the lift/lower element; and
energy supply means comprising:
at least one battery (7) to provide electrical energy to the electric motor; and
at least one hydrogen fuel cell (11) for generating and supplying the battery with electrical energy for charging the battery;
wherein the hydraulic cylinder is configured to provide volumetric neutral operation;
wherein the hydraulic cylinder is configured to retract or extend to under load, and **characterised in that** the hydraulic pump is operable in motor mode using hydraulic fluid driven by the load to communicate energy from the cylinder to transfer the energy produced by the hydraulic cylinder under load to at least one energy storage unit, wherein the energy storage unit comprises the battery.

2. Apparatus as claimed in claim 1, wherein the hydraulic cylinder is operable for producing movement of the lifting member, in dependence upon the speed or rate of revolution of the electric motor.

3. Apparatus as claimed in claim 1 to 2, further comprising at least one control member for controlling either or both the speed and direction of the electric motor.

4. Apparatus as claimed in claim 3, wherein the control member comprises a user-operable control member.

5. Apparatus as claimed in claim 4, wherein the control member is arranged to produce at least one signal for controlling the electric motor.

6. Apparatus as claimed in any of claims 3 to 5, further comprising at least one signal provider for producing at least one signal in accordance with user control of the control member.

7. Apparatus as claimed in any preceding claim, further comprising at least one drive unit for controlling the supply of electrical power to the electric motor.

8. Apparatus as claimed in claim 7, wherein the drive unit is operable to control the supply of electrical power to the electric motor in dependence upon at least one signal transmitted from at least one signal provider.

9. Apparatus as claimed in any preceding claim, further comprising at least one hydrogen storage tank for storing hydrogen.

10. Apparatus as claimed in claim 9, wherein the hydrogen storage tank is coupled in fluid communication with the hydrogen fuel cell for supplying hydrogen to the hydrogen fuel cell, and the hydrogen fuel cell is operable to generate electrical energy using the supplied hydrogen.

11. Apparatus as claimed in any preceding claim, wherein the hydrogen fuel cell is configured to be operable for producing electrical energy and supplying the battery with energy that is equal to that being taken out during operations for replenishing the battery level during operation of the electrical motor.

12. Apparatus as claimed in any preceding claim, wherein the battery operates to regulate power usage.

13. Apparatus as claimed in any preceding claim, wherein the electric motor is operable so that the volumetric flow and pressure to the volumetric neutral cylinders are controlled according to the rate of revolutions of the electric motor and not by valves.

14. Apparatus as claimed in any preceding claim, wherein the flowline forms a closed loop system which circulates a constant amount of hydraulic fluid at desired pressure cycling back and forth, depending on the direction of operation of the cylinder.

15. Apparatus for use on a construction or worksite machine, the apparatus comprising:
at least one hydraulic cylinder (3, 4, 5); at least one hydraulic pump (31) that has at least one electric motor (10) coupled thereto for operating the hydraulic pump, the pump being configured for pumping hydraulic fluid along a flowline for operating at least one hydraulic cylinder to extend or retract; and
energy supply means comprising:
at least one battery (7) to provide electrical energy to the electric motor; and
at least one fuel cell for generating and supplying the battery with electrical energy for charging the battery;
wherein the hydraulic cylinder is configured to provide volumetric neutral operation;
wherein the hydraulic cylinder is configured to retract or extend to under load, and **characterised in that** the hydraulic pump is operable in motor mode using hydraulic fluid driven by the load to communicate energy from the cylinder to transfer the energy produced by the hydraulic cylinder under load to at least one energy storage unit, wherein the energy storage unit comprises the battery.

16. A construction or worksite machine which includes the apparatus in accordance with any preceding claim.

17. A construction or worksite machine as claimed in claim 16, being an excavator provided with a main body and at least one lift/lower element coupled to the main body, the lift/lower element or elements being any of: a boom, an arm, and a bucket.

18. A method of operating the construction or worksite machine of claim 16 or 17.

## Patentansprüche

1. Vorrichtung zur Verwendung an einer Bau- oder Baustellenmaschine, die mit einem Hauptkörper und zumindest einem mit dem Hauptkörper gekoppelten Hebe-/Senkelement versehen ist, wobei die Vorrichtung Folgendes umfasst:
zumindest einen Hydraulikzylinder (3, 4, 5) zur Betätigung des Hebe-/Senkelements:
zumindest eine Hydraulikpumpe (31), die zumindest einen damit gekoppelten Elektromotor (10) zum Betreiben der Hydraulikpumpe aufweist, wobei die Pumpe konfiguriert ist, um Hydraulikflüssigkeit entlang einer Strömungsleitung zu pumpen, um zumindest einen Hydraulikzylinder zu betreiben, der mit dem Hebe-/Senkelement gekoppelt ist; und
Energieversorgungsmittel, umfassend:
zumindest eine Batterie (7) zur Versorgung des Elektromotors mit elektrischer Energie; und
zumindest eine Wasserstoff-Brennstoffzelle (11) zur Erzeugung und Versorgung der Batterie mit elektrischer Energie zum Laden der Batterie;
wobei der Hydraulikzylinder konfiguriert ist, um einen volumetrischen neutralen Betrieb zu ermöglichen;
wobei der Hydraulikzylinder konfiguriert ist, um unter Last ein- oder auszufahren, und
**dadurch gekennzeichnet, dass** die Hydraulikpumpe im Motorbetrieb unter Verwendung von durch die Last angetriebener Hydraulikflüssigkeit betreibbar ist, um Energie von dem Zylinder zu übertragen, um die von dem Hydraulikzylinder unter Last erzeugte Energie an zumindest eine Energiespeichereinheit zu übertragen, wobei die Energiespeichereinheit die Batterie umfasst.

2. Vorrichtung nach Anspruch 1, wobei der Hydraulikzylinder betreibbar ist, um eine Bewegung des Hebeelements in Abhängigkeit von der Geschwindigkeit oder Drehzahl der Umdrehung des Elektromotors zu erzeugen.

3. Vorrichtung nach einem der Ansprüche 1 bis 2, weiter umfassend zumindest ein Steuerelement zum Steuern von einem oder beiden von Geschwindigkeit und Richtung des Elektromotors.

4. Vorrichtung nach Anspruch 3, wobei das Steuerelement ein vom Benutzer bedienbares Steuerelement umfasst.

5. Vorrichtung nach Anspruch 4, wobei das Steuerelement angeordnet ist, um zumindest ein Signal zum Steuern des Elektromotors zu erzeugen.

6. Vorrichtung nach einem der Ansprüche 3 bis 5, weiter umfassend zumindest einen Signalgeber zum Erzeugen zumindest eines Signals in Übereinstimmung mit der Benutzersteuerung des Steuerelements.

7. Vorrichtung nach einem der vorstehenden Ansprüche, weiter umfassend zumindest eine Antriebseinheit zur Steuerung der elektrischen Energieversorgung des Elektromotors.

8. Vorrichtung nach Anspruch 7, wobei die Antriebseinheit so betreibbar ist, dass sie die Zufuhr von elektrischer Energie zum Elektromotor in Abhängigkeit von zumindest einem Signal steuert, das von zumindest einem Signalgeber übertragen worden ist.

9. Vorrichtung nach einem der vorstehenden Ansprüche, weiter umfassend zumindest einen Wasserstoffspeichertank zur Speicherung von Wasserstoff.

10. Vorrichtung nach Anspruch 9, wobei der Wasserstoffspeicher in Fluidverbindung mit der Wasserstoff-Brennstoffzelle gekoppelt ist, um der Wasserstoff-Brennstoffzelle Wasserstoff zuzuführen, und die Wasserstoff-Brennstoffzelle so betreibbar ist, dass sie unter Verwendung des zugeführten Wasserstoffs elektrische Energie erzeugt.

11. Vorrichtung nach einem der vorstehenden Ansprüche, wobei die Wasserstoff-Brennstoffzelle konfiguriert ist, um betreibbar zu sein, elektrische Energie zu erzeugen und die Batterie mit Energie zu versorgen, die derjenigen entspricht, die während des Betriebs entnommen wird, um den Batteriestand während des Betriebs des Elektromotors wieder aufzufüllen.

12. Vorrichtung nach einem der vorstehenden Ansprüche, wobei die Batterie arbeitet, um Stromverbrauch zu regulieren.

13. Vorrichtung nach einem der vorstehenden Ansprüche, wobei der Elektromotor betreibbar ist, so dass der Volumenstrom und der Druck zu den volumetrischen neutralen Zylindern entsprechend der Geschwindigkeit der Umdrehungen des Elektromotors und nicht durch Ventile gesteuert werden.

14. Vorrichtung nach einem der vorstehenden Ansprüche, wobei die Durchflussleitung einen geschlossenen Kreislauf bildet, in dem eine konstante Menge Hydraulikflüssigkeit mit dem gewünschten Druck zyklisch hin und her zirkuliert, abhängig von der Betriebsrichtung des Zylinders.

15. Vorrichtung zur Verwendung auf einer Bau- oder Baustellenmaschine, wobei die Vorrichtung umfasst:
zumindest einen Hydraulikzylinder (3, 4, 5); zumindest eine Hydraulikpumpe (31), mit der zumindest ein Elektromotor (10) zum Betreiben der Hydraulikpumpe gekoppelt ist, wobei die Pumpe konfiguriert ist, um Hydraulikflüssigkeit entlang einer Strömungsleitung zu pumpen, um zumindest einen Hydraulikzylinder zum Ausfahren oder Einfahren zu betreiben; und
Energieversorgungsmittel, umfassend:
zumindest eine Batterie (7) zur Versorgung des Elektromotors mit elektrischer Energie; und
zumindest eine Brennstoffzelle zum Erzeugen und Versorgen der Batterie mit elektrischer Energie zum Laden der Batterie;
wobei der Hydraulikzylinder konfiguriert ist, um einen volumetrischen neutralen Betrieb zu ermöglichen;
wobei der Hydraulikzylinder konfiguriert ist, um unter Last ein- oder auszufahren, und
**dadurch gekennzeichnet, dass** die Hydraulikpumpe im Motorbetrieb unter Verwendung von durch die Last angetriebener Hydraulikflüssigkeit betreibbar ist, um Energie von dem Zylinder zu übertragen, um die von dem Hydraulikzylinder unter Last erzeugte Energie an zumindest eine Energiespeichereinheit zu übertragen, wobei die Energiespeichereinheit die Batterie umfasst.

16. Bau- oder Baustellenmaschine, welche die Vorrichtung nach einem der vorstehenden Ansprüche einschließt.

17. Bau- oder Baustellenmaschine nach Anspruch 16, bei der es sich um einen Bagger handelt, der mit einem Hauptkörper und zumindest einem mit dem Hauptkörper gekoppelten Hebe-/Senkelement versehen ist, wobei das Hebe-/Senkelement oder die Hebe-/Senkelemente eines aus einem Ausleger, einem Arm und einem Eimer sind.

18. Verfahren zum Betreiben der Bau- oder Baustellenmaschine nach Anspruch 16 oder 17.

## Revendications

1. Appareil destiné à être utilisé sur un engin de construction ou de chantier qui est fourni avec un corps principal et au moins un élément de levage/abaissement couplé au corps principal, l'appareil comprenant :
au moins un vérin hydraulique (3, 4, 5) pour actionner l'élément de levage/abaissement :
au moins une pompe hydraulique (31) qui présente au moins un moteur électrique (10) couplé à celle-ci pour actionner la pompe hydraulique, la pompe étant configurée pour pomper un fluide hydraulique le long d'une conduite d'écoulement pour actionner au moins un vérin hydraulique qui est couplé à l'élément de levage/abaissement ; et
des moyens d'alimentation en énergie comprenant :
au moins une batterie (7) pour fournir de l'énergie électrique au moteur électrique ; et
au moins une pile à combustible à hydrogène (11) pour générer et alimenter la batterie en énergie électrique pour charger la batterie ;
dans lequel le vérin hydraulique est configuré pour fournir un fonctionnement neutre volumétrique ;
dans lequel le vérin hydraulique est configuré pour se rétracter ou s'étendre sous charge, et
**caractérisé en ce que** la pompe hydraulique peut fonctionner en mode moteur en utilisant un fluide hydraulique entraîné par la charge pour communiquer l'énergie provenant du vérin afin de transférer l'énergie produite par le vérin hydraulique sous charge à au moins une unité de stockage d'énergie, dans lequel l'unité de stockage d'énergie comprend la batterie.

2. Appareil selon la revendication 1, dans lequel le vérin hydraulique est capable de produire un mouvement de l'élément de levage, en fonction de la vitesse ou de la vitesse de rotation du moteur électrique.

3. Appareil selon la revendication 1 à 2, comprenant en outre au moins un organe de commande pour commander l'une et/ou l'autre de la vitesse et de la direction du moteur électrique.

4. Appareil selon la revendication 3, dans lequel l'organe de commande comprend un organe de commande utilisable par l'utilisateur.

5. Appareil selon la revendication 4, dans lequel l'organe de commande est conçu pour produire au moins un signal pour commander le moteur électrique.

6. Appareil selon l'une quelconque des revendications 3 à 5, comprenant en outre au moins un générateur de signaux pour générer au moins un signal selon la commande d'utilisateur sur l'organe de commande.

7. Appareil selon une quelconque revendication précédente, comprenant en outre au moins une unité d'entraînement pour commander l'alimentation en énergie électrique du moteur électrique.

8. Appareil selon la revendication 7, dans lequel l'unité d'entraînement peut commander l'alimentation électrique du moteur électrique en fonction d'au moins un signal transmis à partir d'au moins un générateur de signaux.

9. Appareil selon une quelconque revendication précédente, comprenant en outre au moins un réservoir de stockage d'hydrogène pour stocker de l'hydrogène.

10. Appareil selon la revendication 9, dans lequel le réservoir de stockage d'hydrogène est couplé en communication fluidique à la pile à hydrogène afin de fournir de l'hydrogène à la pile à hydrogène, et la pile à hydrogène est capable de générer de l'énergie électrique en utilisant l'hydrogène fourni.

11. Appareil selon une quelconque revendication précédente, dans lequel la pile à hydrogène est configurée pour produire de l'énergie électrique et alimenter la batterie avec une énergie qui est égale à celle qui est prélevée pendant le fonctionnement afin de reconstituer le niveau de la batterie pendant le fonctionnement du moteur électrique.

12. Appareil selon une quelconque revendication précédente, dans lequel la batterie fonctionne de manière à réguler la consommation d'énergie.

13. Appareil selon une quelconque revendication précédente, dans lequel le moteur électrique peut fonctionner de telle sorte que le débit volumétrique et la pression vers les vérins neutres volumétriques soient commandés en fonction de la vitesse de rotation du moteur électrique et non par des soupapes.

14. Appareil selon une quelconque revendication précédente, dans lequel la conduite d'écoulement forme un système en boucle fermée qui fait circuler une quantité constante de fluide hydraulique à la pression souhaitée, dans une direction ou dans l'autre, en fonction de la direction de fonctionnement du vérin.

15. Appareil destiné à être utilisé sur un engin de construction ou de chantier, l'appareil comprenant :
au moins un vérin hydraulique (3, 4, 5) ; au moins une pompe hydraulique (31) qui présente au moins un moteur électrique (10) couplé à celle-ci pour actionner la pompe hydraulique, la pompe étant configurée pour pomper le fluide hydraulique le long d'une conduite d'écoulement afin d'actionner au moins un vérin hydraulique pour qu'il s'étende ou se rétracte ; et
des moyens d'alimentation en énergie comprenant :
au moins une batterie (7) pour fournir de l'énergie électrique au moteur électrique ; et
au moins une pile à combustible pour générer et alimenter la batterie en énergie électrique pour charger la batterie ;
dans lequel le vérin hydraulique est configuré pour assurer un fonctionnement neutre volumétrique ;
dans lequel le vérin hydraulique est configuré pour se rétracter ou s'étendre sous charge, et
**caractérisé en ce que** la pompe hydraulique peut fonctionner en mode moteur en utilisant un fluide hydraulique entraîné par la charge pour communiquer l'énergie provenant du vérin afin de transférer l'énergie produite par le vérin hydraulique sous charge à au moins une unité de stockage d'énergie, dans lequel l'unité de stockage d'énergie comprend la batterie.

16. Engin de construction ou de chantier qui inclut l'appareil selon une quelconque revendication précédente.

17. Engin de construction ou de chantier selon la revendication 16, qui est une excavatrice fournie avec un corps principal et au moins un élément de levage/abaissement couplé au corps principal, l'élément ou les éléments de levage/abaissement étant l'un quelconque parmi : une flèche, un bras et un godet.

18. Procédé de commande de l'engin de construction ou de chantier selon la revendication 16 ou la revendication 17.
